Europäisches Patentamt

European Patent Office

Office européen des brevets

(19)

(11) **EP 0 480 506 B1**

(12)

# FASCICULE DE BREVET EUROPEEN

(45) Date de publication et mention
de la délivrance du brevet:
**10.04.1996 Bulletin 1996/15**

(51) Int Cl.⁶: **H04J 3/16**, H04J 3/18

(21) Numéro de dépôt: **91202544.2**

(22) Date de dépôt: **01.10.1991**

(54) **Système de transmission d'informations selon un multiplex temporel présentant une structure variable**

Zeitmultiplex-Informationsübertragungssystem mit variablen Strukturen

TDM - information transmission system with a variable structure

(84) Etats contractants désignés:
**DE FR GB IT**

(30) Priorité: **09.10.1990 FR 9012415**

(43) Date de publication de la demande:
**15.04.1992 Bulletin 1992/16**

(73) Titulaires:
- **TRT TELECOMMUNICATIONS
RADIOELECTRIQUES ET TELEPHONIQUES
F-75013 Paris (FR)**
Etats contractants désignés:
**FR**
- **Philips Electronics N.V.
NL-5621 BA Eindhoven (NL)**
Etats contractants désignés:
**DE GB IT**

(72) Inventeurs:
- **Travers, Jean-François, Société Civile S.P.I.D.
F-75008 Paris (FR)**
- **Briand, Jacques, Société Civile S.P.I.D.
F-75008 Paris (FR)**
- **Guedes, Yvon, Société Civile S.P.I.D.
F-75008 Paris (FR)**

(74) Mandataire: **Chaffraix, Jean et al
Société Civile S.P.I.D.
156, Boulevard Haussmann
F-75008 Paris (FR)**

(56) Documents cités:
EP-A- 0 208 604          FR-A- 2 497 041
FR-A- 2 509 553          US-A- 3 213 201

**Description**

La présente invention concerne un système de transmission d'informations selon un multiplex temporel présentant une structure variable utilisant au moins un canal fréquentiel pour transmettre, par seconde, à des dispositifs d'abonnés, $N_T$ paquets de transmission qui sont formés de $n_t$ éléments binaires et qui sont alloués à des dispositifs d'abonnés fournissant, eux, par seconde, $1/T_S$ paquets d'informations de $n_s$ éléments binaires, système comportant au moins, d'une part un circuit de multiplexage temporel pour multiplexer les informations provenant des dispositifs d'abonnés et pour former ledit multiplex temporel et d'autre part, un circuit de démultiplexage pour distribuer l'information d'un multiplex temporel aux dispositifs d'abonnés.

Un tel système est décrit dans la demande de brevet EP-A 0 261 127. Ce système connu permet de transmettre des paquets d'informations de différents formats. Il est donc possible de s'adapter aux différents formats de paquets d'informations des codeurs-décodeurs de parole que l'on trouve actuellement sur le marché.

L'invention propose un système de ce genre qui offre aussi la possibilité de s'adapter au débit des différents codeurs-décodeurs de parole et qui permet aussi de transmettre des données à des débits variables sur une même trame sans pour cela nécessiter beaucoup de moyens.

Pour cela un tel système est remarquable en ce que il est prévu des moyens d'entrelacement couplés avec le circuit de multiplexage pour mettre dans un paquet de transmission alloué des éléments binaires de différents paquets d'informations alloués au même dispositif d'abonné et des moyens de désentrelacement couplés avec le circuit de démultiplexage pour effectuer l'opération inverse des moyens d'entrelacement.

Un avantage important de l'invention est qu'un paquet d'erreurs survenant sur un paquet de transmission se trouve étalé du fait de l'entrelacement sur plusieurs paquets d'informations, comme ceux-ci sont codés au moyen de codes correcteurs d'erreurs, les informations pourront alors être plus facilement reconstituées puisque les erreurs sont étalées, donc décorrélées. Le codage correcteur d'erreurs sur chaque paquet est donc plus performant.

La description suivante, accompagnée des dessins ci-annexés, le tout donné à titre d'exemple non limitatif, fera bien comprendre comment l'invention peut être réalisée.

La figure 1 montre un système de transmission d'informations conforme à l'invention.

La figure 2 montre des spectres de fréquence utilisés par le multiplex TDMA.

La figure 3 montre l'organisation du multiplex TDMA.

La figure 4 montre la répartition des canaux utilisés pour la transmission des paquets de transmission.

La figure 5 montre le détail du circuit de multiplexage.

La figure 6 montre comment est réalisé l'entrelacement des paquets.

La figure 7 montre comment est réalisé l'entrelacement des éléments binaires par paquet.

La figure 8 montre comment est conçu le circuit d'adresses pour l'entrelacement paquet.

La figure 9 montre comment est conçu le circuit d'adresses pour l'entrelacement des éléments binaires par paquet.

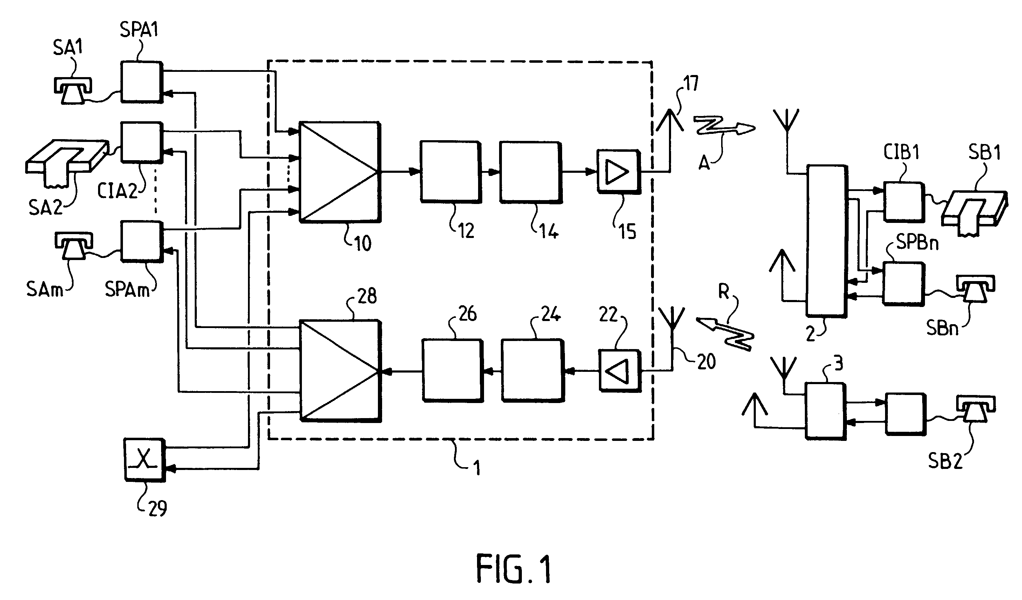

A la figure 1, on a représenté un système de transmission conforme à l'invention. Pour des raisons de simplicité, on a fait figurer trois dispositifs d'émission-réception, référencés par 1, 2 et 3 respectivement, alors qu'en pratique une pluralité de tels dispositifs peut faire partie d'un tel système. Les dispositifs 2 et 3 sont considérés dans cet exemple comme des mobiles alors que le dispositif 1 est considéré comme un poste fixe ou base.

Ces trois dispositifs communiquent entre eux par une liaison bidirectionnelle, de type radio par exemple, qui relie d'une part le dispositif 1 au dispositif 2 et le dispositif 1 au dispositif 3 selon le sens indiqué par la flèche A et d'autre part le dispositif 2 au dispositif 1 et le dispositif 3 au dispositif 1 selon la flèche R.

A chacun de ces dispositifs est rattaché un certain nombre d'organes d'abonnés SA1, SA2, ..., SAm pour le dispositif 1 et SB1, SB3 (non représenté) ..., SBn pour le dispositif 2 et SB2 pour le dispositif 3. Ces organes d'abonné peuvent être des combinés téléphoniques, cas des organes SA1, SAm, SB2 et SBn, et ils sont reliés aux dispositifs 1 à 3 par des codeurs-décodeurs de parole SPA1, SPAm, SPB2 et SPBn respectivement, ou bien encore des dispositifs de transmission en fac-similé, etc.., SA2, SB2 reliés aux dispositifs 1 et 2 par des circuits à interfaces CIA2 et CIB1. Mais quel que soit l'organe d'abonné, les données fournies à leur sortie sont du type binaire, de sorte que la transmission entre les dispositifs 1 à 3 puisse s'effectuer selon un multiplexage temporel numérique du type TDMA, chacun des dispositifs étant pourvu de moyens pour incorporer ou pour prélever les informations du multiplex.

Ce multiplexage est réalisé par le circuit de multiplexage 10, faisant partie du dispositif 1, qui multiplexe les informations provenant des codeurs-décodeurs du circuit interface SPA1, CIA2, ..., SPAm. Aux données multiplexées on ajoute des éléments binaires pour la gestion du paquet et du multiplex au moyen d'un circuit d'insertion 12. Puis les éléments binaires fournis par le circuit 12 sont utilisés par un modulateur 14 qui émet un symbole pour deux éléments binaires (cas de la modulation à deux éléments binaires par symbole). Un émetteur 15 émet ces symboles dans l'espace au moyen d'une antenne d'émission 17 en direction du dispositif 2 selon le sens A.

Les informations provenant du dispositif 2 se propageant selon le sens R sont captées par l'antenne de réception 20. Un circuit récepteur 22 connecté à cette antenne fournit des signaux à un démodulateur 24. Les éléments binaires reconstitués par ce démodulateur sont traités par un circuit de retrait 26 qui ote les éléments binaires de gestion. Un démultiplexeur 28 distribue les informations aux différents décodeurs et circuit d'interfaces SPA1, CIA2, ..., SPAm. Pour être transmis par voie radio, le multiplex TDMA nécessite des canaux fréquentiels centrés autour d'une fréquence porteuse.

De plus il a été prévu pour le dispositif 1, un commutateur du genre PABX 29 qui permet d'établir les communications entre les mobiles, ici, les dispositifs 2 et 3.

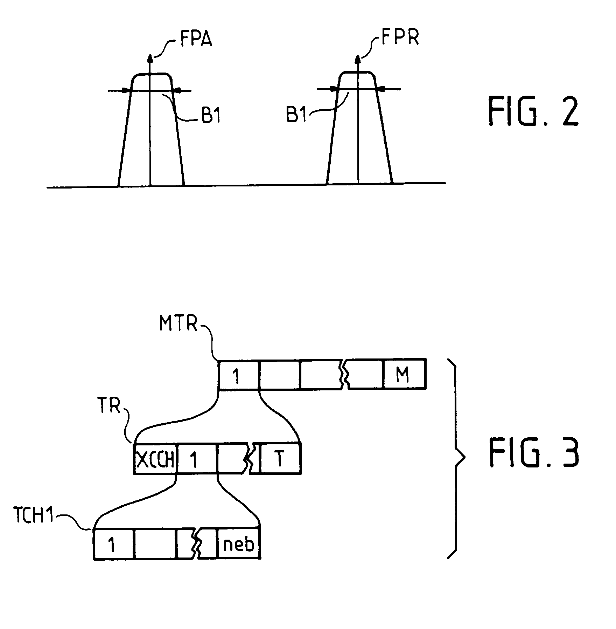

A la figure 2 on a représenté des canaux fréquentiels centrés autour de deux fréquences porteuses FPA et FPR, chacune étant affectée à un sens de transmission A et R respectivement. La bande passante BP envisagée ci-dessus autour de ces fréquences porteuses est de 25 kHz. Les fréquences porteuses sont comprises approximativement dans la bande 400 MHz-900 MHz.

La figure 3 montre l'organisation de ce multiplex TDMA, composé d'une multitrame MTR formée de M trames TR, composées chacune d'une part de T intervalles de temps TCHi (i = 1...T) et d'autre part d'un intervalle de temps XCCH. L'intervalle XCCH est utilisé pour l'organisation du multiplex tandis que les intervalles TCHi le sont pour transmettre le trafic utile. Chacun de ces intervalles $TCH_1$ à $TCH_T$ comporte $n_{eb}$ éléments binaires.

Pour un multiplex temporel véhiculant entre 1 et 6 canaux on aura :

M = 60 trames par multitrame,

T = 19 intervalles de temps TCH par trame, soit 20 intervalles de temps au total avec l'intervalle XCCH,

$n_{eb}$ = 190 éléments binaires dont 46 servent à la récupération des 144 éléments binaires de trafic et à la gestion de la communication (synchronisation, état de l'abonné -décroché ou raccroché...).

Dans le cadre de l'exemple décrit, avec 200 intervalles de temps de trafic utile transmis en 1 seconde, l'ensemble des canaux de trafic dispose de 28,8 keb/s.

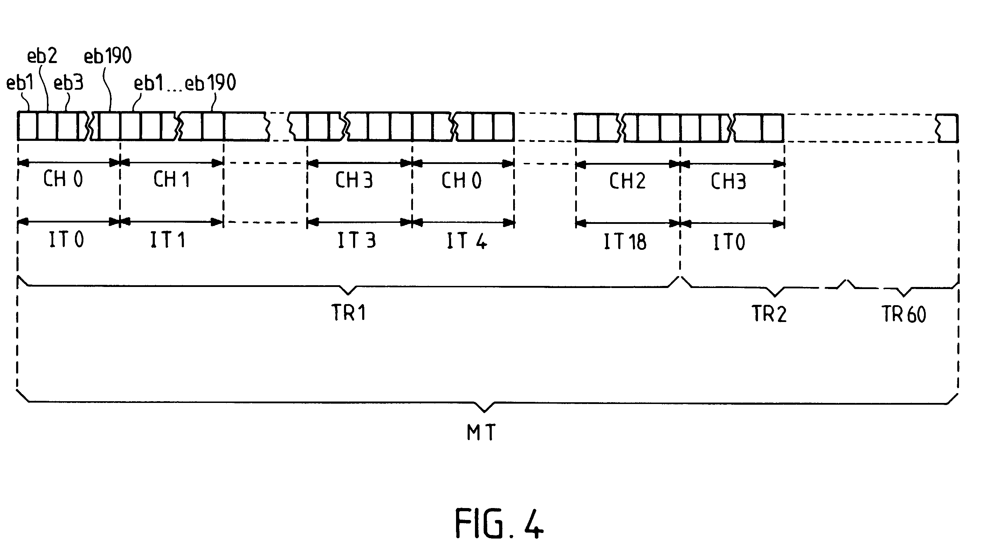

Le multiplex temporel devant s'adapter à différents codeurs de parole (2,4 keb/s, ... 13 keb/s), il est nécessaire d'offrir entre 1 et 6 canaux de trafic. La figure 4 montre l'organisation de ce multiplex pour un nombre de canaux égal à 4.

Les quatre canaux CH0 à CH3 correspondent chacun à un dispositif d'abonné et sont utilisés pour transmettre un paquet de $n_{eb}$ éléments binaires dont 144 sont disponibles pour l'utilisateur. La trame TR1 est constituée de 19 intervalles de temps IT0 à IT18 et une multitrame comprend 60 trames.

Dans une trame les intervalles de temps

IT0, IT4, ..., sont alloués au canal CH0,

IT1, IT5, ..., sont alloués au canal CH1,

IT3, ..., IT15 sont alloués au canal CH3.

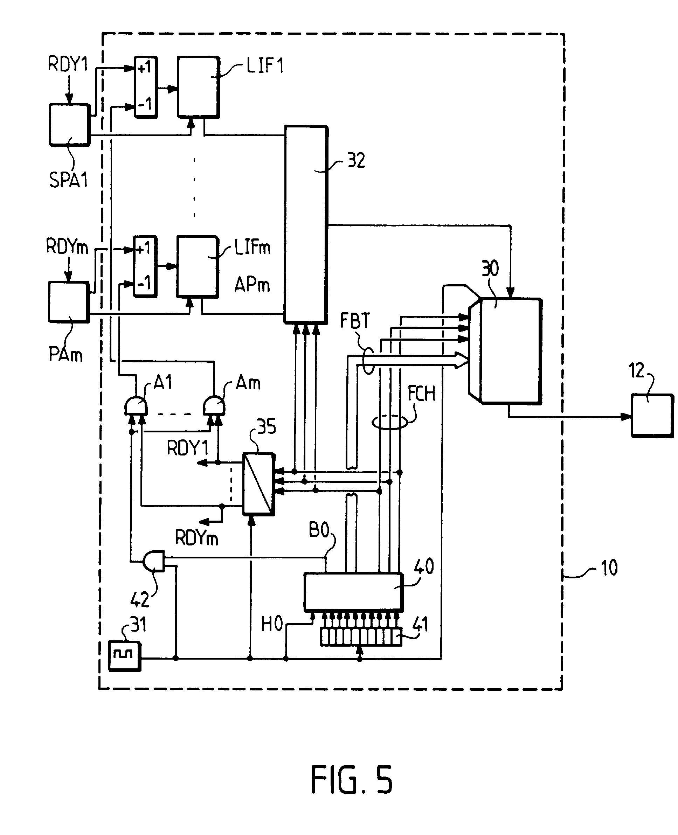

Le circuit de multiplexage 10, montré en détail à la figure 5 est bâti autour d'une mémoire 30 dans laquelle on inscrit les paquets de parole élaborés par les codeurs de parole SPA1, ..., SPAm. Cette mémoire est mise tour à tour en position d'écriture et de lecture au moyen d'un signal H0 périodique élaboré par une horloge 31. Les paquets de paroles transitent par des mémoires-piles LIF1 à LIFm respectivement, qui emmagasinent les éléments binaires un par un et les restituent un par un. Les sorties de ces mémoires LIF1 à LIFm sont reliées à l'entrée de données de la mémoire 30 par l'intermédiaire d'un multiplexeur 32. La sortie de la mémoire 30 est reliée au circuit 12.

L'adressage de cette mémoire est effectué par l'intermédiaire de deux ensembles de fils FCH et FBT. Les fils FCH transmettent un code relatif au canal et concernent donc les informations provenant des codeurs. Ces fils sont donc utilisés, lors de l'écriture de la mémoire 30, pour sélectionner ces différents codeurs. Pour cela, on utilise un décodeur 35 qui, en fonction du code transmis par l'ensemble de fils FCH, active un seul des m fils de sa sortie qui transmettent respectivement les signaux RDY1, ..., RDYm. Ces signaux sont appliqués d'une part aux décodeurs SPA1 à SPAm pour lancer la prochaine conversion et d'autre part, à une série de portes ET A1 à Am.

Les signaux de sortie de ces portes agissent sur le pointeur d'adresse des mémoires-piles LIF1 à LIFm pour vider ces mémoires lorsqu'ils sont actifs. Pour remplir ces mémoires des signaux provenant directement des codeurs SPA1 à SPAm sont fournis au pointeur d'adresse.

Pour adresser la mémoire 30 on utilise un circuit d'adressage 40 dont les sorties sont reliées aux ensembles de fils précités FCH et FBT et dont une sortie B0 est reliée à une porte 42 insérée entre la sortie de l'horloge 31 et une des entrées des portes A1 à Am. Ce signal à la sortie B0 permet de bloquer le vidage des mémoires-piles LIF1 0 LIFm en inhibant la porte affectée au décomptage du pointeur d'adresse de la mémoire-pile concernée.

Cette mémoire est adressée par un compteur 41 comptant les impulsions de l'horloge 31.

L'invention propose d'adapter ce multiplex aux différents besoins des abonnés.

## I - CAS DE LA TRANSMISSION DE DONNEES

Si chaque élément binaire de données est codé selon un taux de codage 1/2 (c'est-à-dire qu'aux éléments binaires à transmettre on adjoint d'autres éléments binaires pour mettre en oeuvre un codage détecteur et/ou correcteur d'erreurs).

La formule suivante donne les répartitions des canaux possibles :

$$(lx9600) + (kx4800) + (jx2400) + (ix1200) \leq 14400 \text{ eb/s}$$

où

l est le nombre de canaux de transmission à 9600 eb/s

k est le nombre de canaux de transmission à 4800 eb/s

j est le nombre de canaux de transmission à 2400 eb/s

i est le nombre de canaux de transmisison à 1200 eb/s

## II - CAS DE LA TRANSMISSION DE PAROLE CODEE SOUS FORME NUMERIQUE

### II - 1 Considération sur les codeurs

Pour transmettre de la parole différents codeurs-décodeurs de parole sont présentés sur le marché. Le tableau I ci-dessous donne les caractéristiques de quelques-uns, référencés de A à K. Ces codeurs fournissent des paquets d'éléments binaires d'information : par exemple 48 pour le codeur-décodeur A toutes les 20 ms, ce qui représente un débit de 2,4 k.eb/s. A titre d'illustration le type G correspond à une réalisation MATRA, le type J à une réalisation MOTOROLA.

TABLEAU I

| Codeur | Débit k.eb/s | Périodicité ms | Grandeur paquet |
|--------|--------------|----------------|-----------------|
| A | 2,4 | 20 | 48 |
| B | 2,4 | 25 | 60 |
| C | 2,4 | 30 | 72 |
| D | 4,8 | 20 | 96 |
| E | 4,8 | 25 | 120 |
| F | 4,8 | 30 | 144 |
| G | 6 | 20 | 120 |
| H | 6,7 | 20 | 134 |
| I | 7,2 | 20 | 144 |
| J | 8 | 20 | 160 |
| K | 13 | 20 | 260 |

Il est intéressant de noter que dans le cadre de notre exemple décrit, il est possible d'obtenir les liaisons suivantes, indiquées dans le Tableau II, dans lequel DU signifie une liaison duplex et H.DU, une liaison à l'alternat.

| Codeur: | K | H,I,J | D,E,F | A,B,C |
|---------|-----|-----------|-------|-------|
| Nb | 1DU | 1DU + 1H.DU | 2DU | 3DU |
| { | | | | |
| liaison | 2H.DU | 3H.DU | 4H.DU | 6H.DU |

L'adaptation aux différents codeurs, tant en débit qu'en structure de paquets, au multiplex est réalisée grâce à la combinaison de la structure de trame réalisant l'adaptation en terme de débit et aux moyens d'entrelacement réalisant l'adaptation en terme de structure de paquet.

L'adressage de la mémoire 30 réalisant l'adaptation décrite précédemment est réalisé autour de FCH et FBT dont les caractéristiques sont déterminées par le nombre de canaux et le schéma d'entrelacement.

### II - 2 Considérations sur la conception de circuit d'adressage

### 1) Détermination du nombre de canaux

Le nombre maximum de canaux est fixé à 6 dans l'exemple décrit, ce qui correspond à 3 fils pour l'ensemble FCH. Le nombre C de ces canaux à utiliser est donné par la formule :

$$C = INT \ (DU/Df)$$

où

INT( ) =   partie entière de la quantité placée à l'intérieur des parenthèses,
DU =   28,8 keb/s débit des éléments binaires utiles que transmet le multiplex,
Df =   débit utile du codeur de parole avec codage correcteur d'erreurs.

**2) Détermination des facteurs d'entrelacement**

Les facteurs d'entrelacement à déterminer sont m1 et m2. Ils doivent respecter la relation suivante :

$$(Df.Ts) \times m2/m1 \leq Du/N_T$$

où

Df.TS   représente le nombre d'éléments binaires du paquet fournis par le codeur,
NT   est le nombre de intervalles de temps par seconde, dans cet exemple décrit, $N_T = 200$ c'est-à-dire $Du/N_T = 144$.

Le Tableau III ci-dessous donne les facteurs d'entrelacement pour différents codeurs envisageables.

TABLEAU III

| Nombre de canaux C | 2 | 3 | 4 | 5 | 6 |
|---|---|---|---|---|---|
| nb d'intervalles de temps/s imparti à chaque canal | 100 | 66,6 | 50 | 40 | 33,33 |
| entrelacement pour codeur (m1, m2) | | | | | |
| A,D,G,H,I,J,K (20 ms) | (2N,N) | (4N,3N) | (N,N) | (4N,5N) | (2N,3N) |
| B,E (25 ms) | (5N,2N) | (5N,3N) | (5N,4N) | (N,N) | (5N,6N) |
| C,F (30 ms) | (3N,N) | (2N,N) | (3N,2N) | (6N,5N) | (N,N) |

N définit la prodondeur de l'entrelacement : plus N est grand, plus les paquets d'erreurs sont étalés et plus les codes correcteurs d'erreurs sont efficaces.

Différentes sortes d'entrelacement peuvent être envisagées.

**III - ENTRELACEMENT**

**III - 1 Entrelacement paquet**

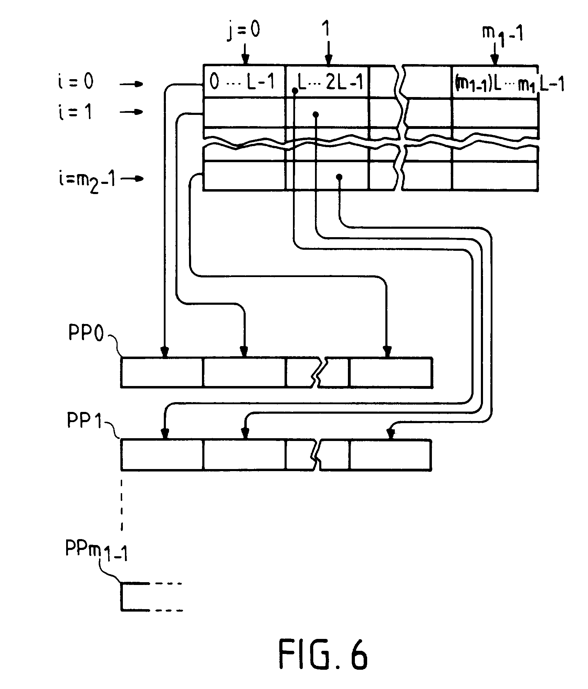

Le principe peut être expliqué à l'aide de la figure 6 qui représente un tableau dont les différentes lignes numérotées de i = 0 à $m_2$-1 contiennent $m_2$ paquets d'informations successifs fournis par un codeur. Chacun de ces paquets est divisé en $m_1$ sous-paquets, comme représenté à la figure 6 par les références j = 0, 1, 2, ..., $m_1$-1. Chacun de ces $m_1$ sous-paquets est formé de L éléments binaires.

Le résultat de l'entrelacement est une série PP0 à $PPm_1$-1 de paquets de $m_2 \times L$ éléments binaires formés des sous-paquets lus en colonne.

Ainsi le paquet PP0 sera formé des L premiers éléments binaires des $m_2$ paquets d'informations, le paquet PP1 des éléments binaires L à 2L-1 des $m_2$ paquets d'informations.

Le nombre d'éléments binaires des sous-paquets doit être inférieur ou égal au nombre d'éléments binaires des paquets de transmission. Aussi, en cas d'infériorité de bits, des bourrages sont insérés dans les paquets de transmission, le signal B0 inhibant la porte 42.

**III - 2 Entrelacement élément binaire-paquet**

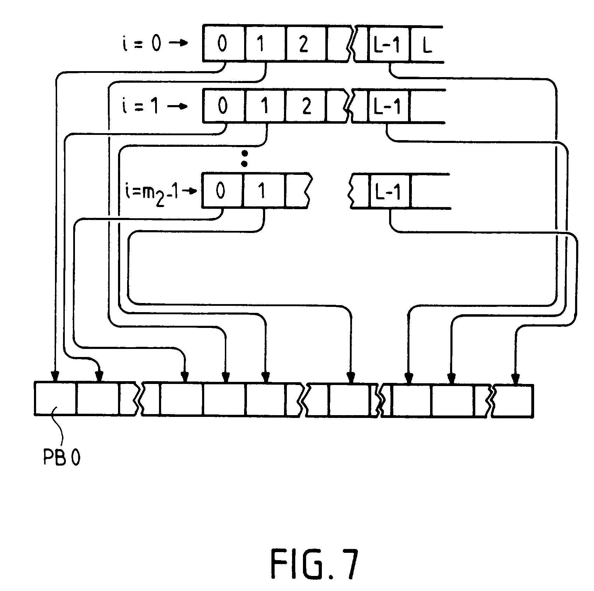

Ceci est expliqué à l'aide de la figure 7. Tout comme pour l'entrelacement paquet on a représenté un tableau dans lequel les différentes lignes numérotées i = 0 à $m_2$-1 représentent les $m_2$ paquets d'informations, divisés chacun en $m_1$ sous-paquets de L éléments binaires.

Le résultat de cet entrelacement est une série de paquets PB0 à $PBm_1$-1. Seul le paquet PB0 est représenté sur cette figure. Ce paquet est formé des premiers éléments binaires pris successivement dans les paquets i = 0, i = 1, i = $m_2$-1, puis des seconds éléments binaires et ainsi de suite pour tous les éléments binaires du sous-paquet. Le deuxième paquet PB1 sera contitué de la même manière pour les L éléments binaires suivants le L-1$^{ème}$.

La table d'adressage peut être conçue facilement en fonction des considérations ci-dessous.
On doit considérer deux phases : une phase d'écriture de la mémoire et une phase de lecture.

## IV - CONCEPTION DE LA TABLE D'ADRESSAGE

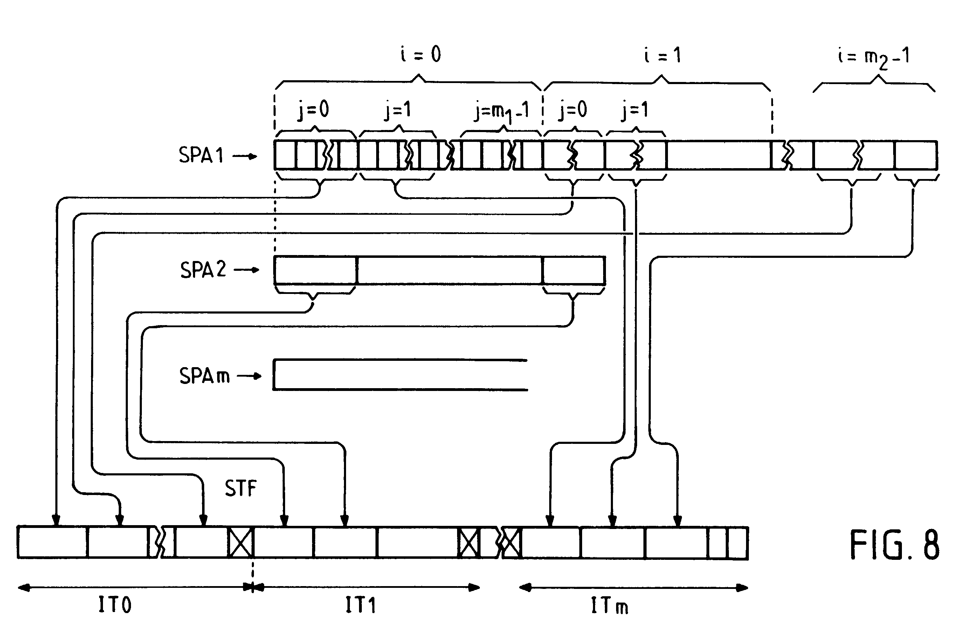

### IV - 1 Entrelacement paquet (voir figure 8)

#### a) Phase d'écriture

Chaque paquet d'informations est inscrit élément binaire par élément binaire dans la mémoire, pour chacun des codeurs en service.

Ainsi en se reportant à la figure 8, l'inscription s'effectue de la façon suivante :

pour $i = 0$      chaque paquet émanant de SPA1 à SPAn est inscrit, puis

pour $i = 1$,      on recommence et ainsi de suite ...

#### b) Phase de lecture

Cette phase de lecture consiste, en lisant la mémoire 30, à remplir les paquets de transmission. L'intervalle de temps ITO sera rempli successivement des sous-paquets $j = 0$, des paquets $i = 1$ et $i = m_2$-1, le tout provenant du codeur SPA1, et éventuellement rempli des éléments binaires de bourrage STF. Puis, la même opération sera effectuée pour chaque codeur SPA2 à SPAm. Puis, pour l'intervalle de temps ITm, les sous-paquets $j = 1$ des paquets $i = 0$ à $i = m_2$-1 y seront insérés, et ainsi de suite.

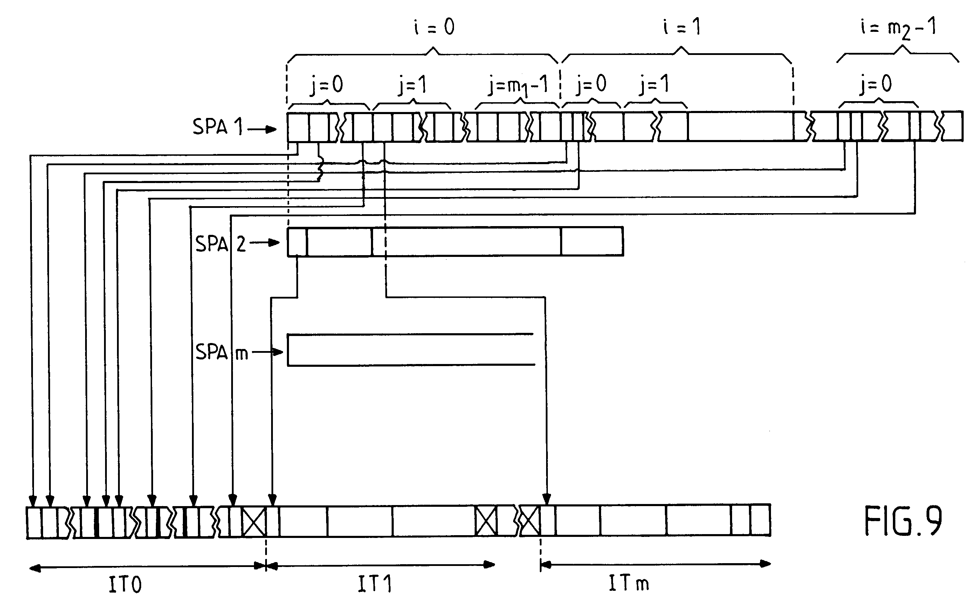

### IV - 2 Entrelacement élément binaire-paquet (voir fig. 9)

#### a) Phase d'écriture

Elle est identique à celle décrite ci-dessus.

#### b) Phase de lecture

Tous les premiers éléments binaires des $m_2$ paquets ($i = 0$, ..., $m_2$-1) sont mis dans l'intervalle de temps ITO, puis les deuxièmes. Ainsi, sur la figure 9, tous les premiers éléments binaires sont mis dans la tranche de temps ITO, puis le deuxième élément binaire des ($i = 0$, ..., $m_2$-1) sous-paquets $j = 0$ jusqu'à épuisement des éléments binaires des sous-paquets $j = 0$. La même opération est effectuée pour tous les codeurs SPA1 à SPAm.

Puis, à l'intervalle de temps ITm, qui est attribué aux éléments binaires du codeur SPA1 on continue avec tous les éléments binaires des ($i = 0$, ..., $m_2$-1) sous-paquets $j = 1$ et ainsi de suite.

## V - DESENTRELACEMENT

Il est l'opération inverse de l'opération d'entrelacement et tout homme de l'art est apte à concevoir le désentrelacement en fonction de ce qui a été dit pour l'entrelacement.

### Revendications

1. Système de transmission d'informations selon un multiplex temporel présentant une structure variable utilisant au moins un canal fréquentiel pour transmettre, par seconde, à des dispositifs d'abonnés (**SPBn, CIB1...**), $N_T$ paquets de transmission qui sont formés de $n_t$ éléments binaires et qui sont alloués à des dispositifs d'abonnés **(SPA1, CIA2...)** fournissant, eux par seconde, $1/T_S$ paquets d'informations de $n_s$ éléments binaires, système comportant au moins, d'une part un circuit de multiplexage temporel **(10)** pour multiplexer les informations provenant des dispositifs d'abonnés **(SPA1, CIA2..)** et pour former ledit multiplex temporel et d'autre part, un circuit de démultiplexage **(28)** pour distribuer l'information d'un multiplex temporel aux dispositifs d'abonnés **(SPBn, CIB1...)**, caractérisé en ce qu'il est prévu des moyens d'entrelacement couplés avec le circuit de multiplexage pour mettre dans un paquet de transmission alloué des éléments binaires de différents paquets d'informations alloués au même dispositif d'abonné et des moyens de désentrelacement couplés avec le circuit de démultiplexage pour effectuer l'opération inverse des moyens d'entrelacement.

2. Système de transmission selon la revendication 1, caractérisé en ce que les moyens d'entrelacement sont conçus

pour transformer $m_2$ paquets différents d'informations constitués de $m_1$ sous-paquets d'informations en $m_1$ paquets de transmission constitués de $m_2$ sous-paquets d'information différents.

3. Système de transmission selon la revendication 1, caractérisé en ce que les moyens d'entrelacement sont conçus pour transformer $m_2$ paquets différents d'informations constitués de $m_1$ sous-paquets d'informations en $m_1$ paquets de transmission constitués des éléments binaires de chaque sous-paquet successif d'information, deux éléments binaires successifs d'un même paquet d'information se trouvant espacés de $m_2$ éléments binaires dans les paquets de transmission.

4. Système de transmission selon l'une des revendications 1 à 3, caractérisé en ce que des éléments binaires dits de bourrage peuvent être placés dans les paquets de transmission.

## Patentansprüche

1. Ein Informationsübertragungssystem nach einem Zeitmultiplex mit variablen Strukturen, das zur Übertragung an Teilnehmervorrichtungen (SPBn, CIB1...) pro Sekunde mindestens einen Frequenzkanal verwendet, um aus $n_t$ binären Elementen gebildete $N_T$ Übertragungspakete zu übertragen, zugeteilt an Teilnehmervorrichtungen (SPA1, CIA2...), die wiederum pro Sekunde $1/T_S$ Informationspakete aus $n_s$ binären Elementen liefern, wobei das System mindestens einerseits eine Zeitmultiplexschaltung (10) zum Multiplexen der von den Teilnehmervorrichtungen (SP11, CI12...) herrührenden Informationen und die Bildung des besagten Zeitmultiplex, und andererseits eine Demultiplexschaltung (28) zur Verteilung der Information eines Zeitmultiplex an die Teilnehmervorrichtungen (SP8n, CI81...) aufweist, mit dem Merkmal, daß mit der Multiplexschaltung Vorrichtungen zur Kopplungsverflechtung vorgesehen sind, um in ein zugeteiltes Übertragungspaket binäre Elemente der verschiedenen der selben Teilnehmervorrichtung zugeteilte Informationspakete zu geben, und mit der Multiplexschaltung Vorrichtungen zur Kopplungsentflechtung vorgesehen sind, um den Verflechtungsvorgang in umgekehrter Richtung durchzuführen.

2. Ein Übertragungssystem laut Anspruch 1, mit dem Merkmal, daß Verflechtungsvorrichtungen zur Umwandlung von $m_2$ verschiedenen Informationspaketen vorgesehen sind, die aus $m_1$ verschiedenen Unter-Informationspaketen in $m_1$ Übertragungspaketen gebildet sind, aus $m_2$ verschiedenen Unter-Informationspaketen gebildet.

3. Ein Übertragungssystem laut Anspruch 1, mit dem Merkmal, daß Verflechtungsvorrichtungen zur Umwandlung von $m_2$ verschiedenen Informationspakete vorgesehen sind, die aus $m_1$ verschiedenen Unter-Informationspaketen in $m_1$ Übertragungspaketen gebildet sind, aus den binären Elementen jedes aufeinanderfolgenden Unter-Informationspaket gebildet, wobei zwei aufeinanderfolgende binäre Elemente des selben Informationspakets in jedem der Informationspakete einen Abstand von $m_2$ binärer Elemente aufweisen.

4. Ein Übertragungssystem laut einem der Ansprüche 1 bis 3, mit dem Merkmal, daß sogenannte binäre Füllelemente in die Übertragungspakete gegeben werden können.

## Claims

1. Time-division multiplex information transmission system presenting a variable structure using at least one frequency channel for transmitting per second $N_T$ transmission packets to subscriber arrangements (SPBn, CIB1, ...), which packets are constituted by $n_t$ bits and allocated to subscriber arrangements (SPA1, CIA2, ...) themselves producing $1/T_S$ information packets of $n_s$ bits per second, which system comprises at least a time-division multiplex circuit (10) for multiplexing the information signals coming from the subscriber arrangements (SPA1, CIA2, ...) and for forming said time-division multiplex and also comprises a demultiplex circuit (28) for distributing the time-division multiplex information to the subscriber arrangements (SPBn, CIB1, ...), characterized in that interleaving means are provided coupled to the multiplex circuit for inserting bits of different information packets allocated to the same subscriber arrangement into an allocated transmission packet and de-interleaving means coupled to the demultiplex circuit for performing the reverse operation of the interleaving means.

2. Transmission system as claimed in Claim 1, characterized in that the interleaving means transform $m_2$ different information packets constituted by $m_1$ subpackets of information signals into $m_1$ transmission packets constituted by $m_2$ subpackets of different information signals.

3. Transmission system as claimed in Claim 1, characterized in that the interleaving means transform $m_2$ different information packets constituted by $m_1$ subpackets of information signals into $m_1$ transmission packets constituted by bits of each successive sub-packet of information signals, while two successive bits of a same information packet are interspaced by $m_2$ bits in the transmission packets.

4. Transmission system as claimed in one of the Claims 1 to 3, characterized in that bits called stuff bits can be positioned in the transmission packets.

FIG.1

EP 0 480 506 B1

FIG. 2

FIG. 3

FIG. 4

EP 0 480 506 B1

FIG. 5

FIG. 6

FIG. 7

FIG. 8

FIG.9